# EUROPEAN PATENT SPECIFICATION

(11) **EP 2 933 931 B1**
(45) Date of publication and mention of the grant of the patent: **22.03.2017**
(21) Application number: 15162119.0
(22) Date of filing: 31.03.2015
(51) Int. Cl.: H04B 7/185, G08G 5/00, H04B 1/00

(54) **Radio resource management system for aircraft with software defined radio unit.**
Verwaltungsanordnung für Funkmittel für Flugzeug mit software bestimmte Funkeinheit.
Système de gestion de ressource radio pour avion avec une unité de radio software.

(30) Priority: 15.04.2014 US 201414253536
(43) Date of publication of application: 21.10.2015
(73) Proprietor: Honeywell International Inc., Morris Plains, NJ 07950 (US)
(72) Inventor: Kanovsky, Petr, Morristown, NJ New Jersey 07962-2245 (US); Adamek, Karel, Morristown, NJ New Jersey 07962-2245 (US); Zaruba, Radek, Morristown, NJ New Jersey 07962-2245 (US); Mlaskac, Martin, Morristown, NJ New Jersey 07962-2245 (US)
(74) Representative: Houghton, Mark Phillip

(56) References cited:
- EP-A1- 0 407 179
- US-A1- 2012 295 537
- US-B1- 7 720 506
- US-B1- 7 941 248

## Description

### BACKGROUND

In the coming years, aeronautical communication infrastructure will change as a result of two major ongoing Air Traffic Management (ATM) modernization programs-SESAR and NextGen. SESAR is being implemented in Europe and NextGen is being implemented in the US. Both of these programs assume that the future of ATM will diverge from voice communication to air/air and air/ground data exchanges. Notwithstanding these programs, the joint Eurocontrol/Federal Aviation Administration (FAA) program "Action Plan 17" identified a possible need for up to three new communication technologies that primarily support Air Traffic Control (ATC) and Air Operation Communication (AOC) services. The three new communication technologies are the airport local communication system (AeroMACS), the new terrestrial line-of-sight communication systems (L-DACS) and a new satellite communication (Satcom). AeroMACS is currently being pursued in both Europe and the US, while L-DACS and the new Satcom are only being developed in Europe. The US, on the other hand, is updating the existing very high frequency (VHF) datalink technologies. Due to the changing aeronautical communication infrastructure, planes will be required to install more radio equipment onboard aircrafts. The added onboard radio equipment will add complexity, weight and cost to aircrafts.

For the reasons stated above and for other reasons stated below which will become apparent to those skilled in the art upon reading and understanding the specification, there is a need in the art for improved systems and methods for reducing the amount of radio equipment onboard an aircraft. This disclosure provides a solution. See US 7,941, 248 (Tsamis et al.).

### SUMMARY

The present invention provides a system as defined in claim 1. The system may include the features of any one or more of dependent claims 2 to 5.

The present invention also provides a method as defined in claim 6. The method may include the features of any one or more of dependent claims 7 to 10.

The Embodiments of the present invention provide methods and systems for radio resource management and will be understood by reading and studying the following specification.

In one embodiment, an avionics radio resource management system comprises: at least one radio frequency unit configured to transmit and receive signals over an antenna; at least one software defined radio unit configured to communicate with the at least one radio frequency unit, wherein the at least one software defined radio unit can generate and receive signals corresponding to different communication systems; at least one processing device coupled to the at least one software defined radio unit; and at least one memory device coupled to the at least one processing device and configured to store instructions which, when executed by the at least one processing device, cause the at least one processing device to: receive a plurality of situational data inputs; select at least one communication system using the plurality of situational data inputs; and configure the at least one radio frequency unit and the at least one software defined radio unit to transmit and receive signals using the at least one selected communication system, wherein the configuration is based on the plurality of situational data inputs.

### DRAWINGS

Understanding that the drawings depict only exemplary embodiments and are not therefore to be considered limiting in scope, the exemplary embodiments will be described with additional specificity and detail through the use of the accompanying drawings, in which:
Figures 1A-1E are block diagrams illustrating embodiments of example Radio Resources Management (RRM) systems of the present disclosure;
Figure 2 is a block diagram illustrating an example embodiment of the present disclosure; and
Figure 3 is a flow diagram illustrating a method of one embodiment of the present disclosure.

In accordance with common practice, the various described features are not drawn to scale but are drawn to emphasize specific features relevant to the exemplary embodiments.

### DETAILED DESCRIPTION

In the following detailed description, reference is made to the accompanying drawings that form a part hereof, and in which is shown by way of illustration specific illustrative embodiments. However, it is to be understood that other embodiments may be utilized and that logical, mechanical, and electrical changes may be made. Furthermore, the method presented in the drawing figures and the specification is not to be construed as limiting the order in which the individual steps may be performed. The following detailed description is, therefore, not to be taken in a limiting sense.

Embodiments of the present disclosure address the problems of the current state of the art by providing aircraft with an on-board radio resources manager (RRM) that controls the configuration of a flexible avionics radio architecture designed around the principles of Software Define Radios (SDR) with reconfigurable functionality. That is, as opposed to an on-board resource manager that merely selects which communication datalink is optimal to use for a particular communication, the embodiments of RRMs described herein will reconfigure SDR avionics, either pre-flight or during flight, to fulfill operational requirements. This includes in-flight reconfiguration of SDR avionics used for flight communications, navigation and surveillance (CNS) radios. Dynamically reprogrammable elements within the CNS radio hardware units are reconfigured by the RRM (using contextual based inputs discussed below) to reconfigure various parameters of the radio hardware and software. For example, radio hardware and software currently configured to transmit and receive using a very high frequency (VHF) voice waveform can be reconfigured by the RRM to transmit and receive a waveform to establish an Iridium datalink. In another example, if one piece of radio hardware is currently transmitting and receiving using VHF, but a different piece of hardware is preferred to transmit/receive using VHF, then the RRM can reconfigure the radio hardware to accomplish this objective. The RRM makes reconfiguration selections from a plurality of available protocols including, but not limited to, VHF voice, very high frequency data link (VDL), high frequency (HF) voice, high frequency data link (HFDL), Inmarsat, Iris and Iridium. Further, the RRM's selection decision algorithm can weigh contextual inputs including established policies and sensor inputs in deciding how radio hardware is reconfigured. In this way, a single piece of on-board radio hardware unit can potentially fulfill operational requirements that previously required multiple radio units, which will reduce the number of radio units necessary onboard an aircraft. This flexible avionics radio architecture permits existing on-board avionics radios to accommodate regional preferences. For example, an aircraft previously used in, and configured for, domestic U.S. service might be sold to another non-U.S. airline and can be readily reconfigured to accommodate a different set of communication protocol preferences without requiring a substantial change in hardware. Further, obsolescence issues are mitigated since the flexible avionics radio architecture can be easily upgraded and reconfigured to accommodate future avionics communications options.

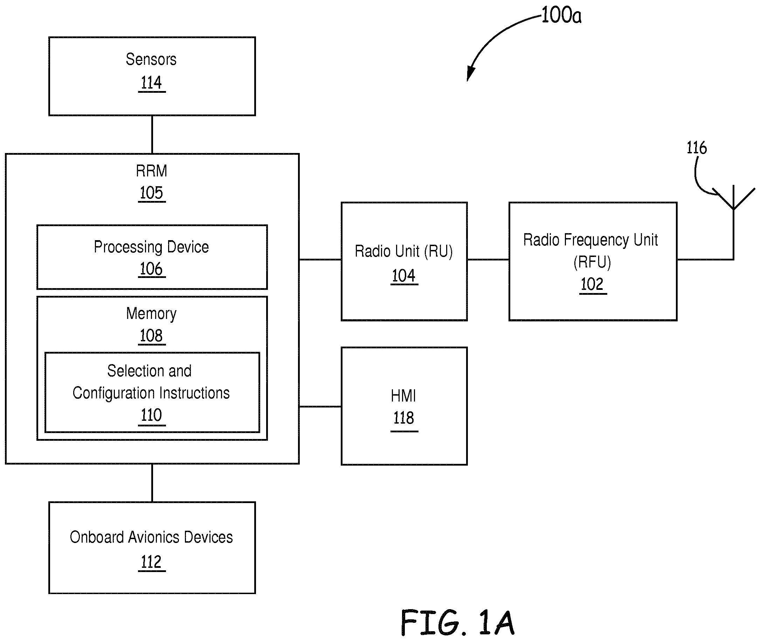

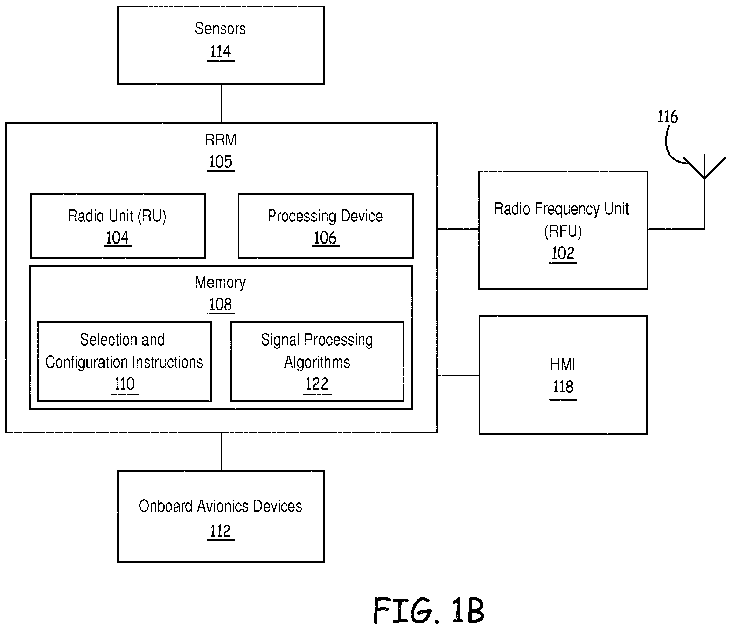

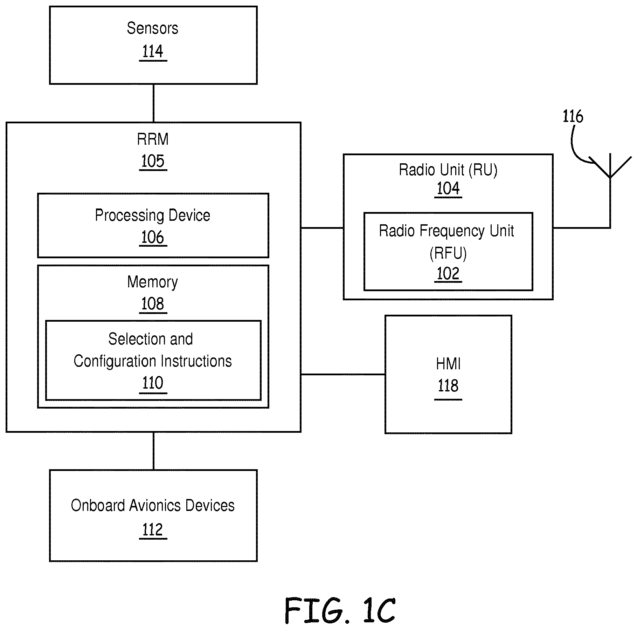

Figure 1A is an example of an avionics system 100a of one embodiment of the present disclosure. Avionics system 100a is installed on-board an aircraft and provides communication for the aircraft to and from remote entities (e.g., ground based or other aircraft) through a plurality of communication systems and system configurations. Avionics system 100a includes at least one radio frequency unit 102 (RFU), at least one software defined radio unit 104 (RU) configured to communicate with the at least one RFU 102, and at least one RRM 105 comprising one or more processing devices 106 coupled to the at least one RU 104. Further, RRM 105 includes at least one memory device 108 that is coupled to processing device 106 and configured to store instructions 110 which, when executed by processing device 106, cause processing device 106 to receive a plurality of situational data inputs, select at least one communication system using the plurality of situational data inputs, and configure RFU 102 and RU 104 to transmit and receive signals using the at least one communication system, wherein the configuration is based on the plurality of situational data inputs. In some embodiments, RRM 105 and RU 104 can be separate physical units, as shown in Figure 1A. In these embodiments, the RRM 105 and RU 104 can be connected over avionic network busses. In other embodiments, RRM 105 and RU 104 can be one physical unit, as shown in Figure 1B. In these embodiments, RRM 105 and RU 104 can share the same memory 108 and processing device 106. Moreover, in some embodiments, RFU 102 can be incorporated into RU 104, as shown in Figure 1C. And in other embodiments, RFU 102 and RU 104 can be separate units. As explained in further detail below, the configuration selected by processing device 106 is based on the plurality of situational data inputs. The terms "situational data inputs" and "contextual based inputs" will be used interchangeably with the word "inputs" throughout this disclosure.

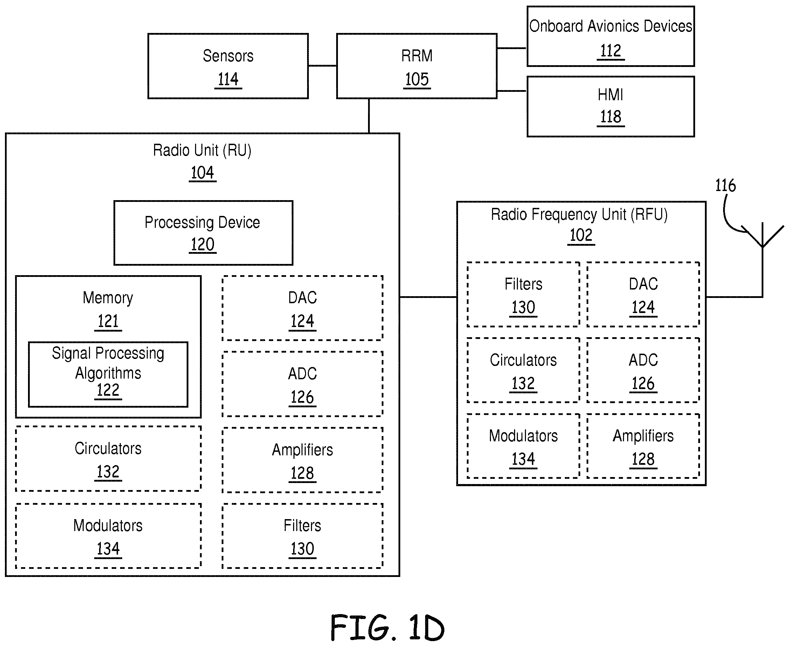

RU 104 in combination with RFU 102 can be configurable to process radio signals in accordance with different communication protocols, such as any one or more suitable HF, HFDL, VHF, VDL, and Satcom protocols including protocols conforming to the following systems: Inmarsat, Iridium, Thuraya, and MTSAT as well as future systems such as Iris, AeroMACS and Iridium NEXT. The RFU 102 can then generate a radio signal for propagation using an antenna 116. Figure 1D is an example of internal components of RU 104 and RFU 102. More specifically, in embodiments, where RU 104 and RFU 102 are separate units, RU 104 receives signals from RFU 102 and uses a processing device 120 to execute signal processing algorithms 122 necessary to implement a SDR based on configuration parameters stored in its memory 121. In some embodiments, RU 104 can include digital-to-analog converters (DACs) 124 and analog-to-digital converters (ADCs) 126 to support transporting analog signals from RU 104 to RFU 102 and from RFU 102 to RU 104. In other embodiments, DACs 124 and ADCs 126 can be included in the RFU 102 and digital signals are transported from RU 104 to RFU 102 and from RFU 102 to RU 104. In some embodiments, RU 104 and RFU 102 are capable of processing two or more waveforms simultaneously. Moreover, processing device 120 can receive instructions from RRM 105 to implement certain configuration parameters that RRM 105 selects based on situational data inputs. In embodiments where RFU 102 and RU 104 are part of the same unit, the processes and elements described above can all be included in that same unit.

In addition, RU 104 and RFU 102 can comprise elements commonly associated with RF signal transmission and reception such as amplifiers 128, filters 130, circulators 132, modulators 134, etc. for broadcasting RF signals from antenna 116 and receiving signals via antenna 116. In embodiments where RU 104 and RFU 102 are separate units, the inclusion of the elements 124-134 in either RU 104 or RFU 102 will depend on where the digital to analog conversion takes place, as known to one having skill in the art. In some embodiments, the circulators 132 can be in both RU 104 and RFU 102 at the same time. Therefore, the signals between RU 104 and RFU 102 can be either digital or analog depending on where the digitization occurs. Stated another way, the functionality distribution between RU 104 and RFU 102 can be different in different embodiments. In some embodiments, RFU 102 can include the hardware for the analog signal path and RU 104 can include the hardware and software for processing the digitized signal. In other examples, only the frequency filters and low noise amplifiers can be included in RFU 102 and all the remaining hardware and software for transmitting and receiving signals is separate from RFU 102. Then, in this example, the signals between RU 104 and RFU 102 are analog. As stated above, these examples are where RU 104 and RFU 102 are separate units. In embodiments where RFU 102 and RU 104 are part of a single unit, then the single unit can include all of the elements discussed above.

RFU 102 can also include selection of transmit/receive radio frequencies and selection of output power based on the configuration of the RU 104 with which the RFU 102 is communicating. In some examples, configurability of the RFU 102 can include selecting a path based on the type of waveform being sent (e.g., Inmarsat and Iris systems may use an output diplexer to split the receive/transmit frequency bands, while Iridium uses time division duplex and may use a transmit/receive switch instead). However, this described embodiment is not meant to be limiting. In some embodiments, RU 104 and RFU 102 are integrated into a single unit. In other embodiments RU 104 and RFU 102 are in separate units. In other embodiments, some of the functions described with respect to RU 104 may instead be performed by RFU 102 and vise-versa.

In various alternate embodiments, processing devices 106, 120 can be implemented using, for example, a microprocessor, a microcontroller, a digital signal processor, field programmable gate array (FPGA), or other programmable element or combinations thereof. Memory devices 108, 121 can include any appropriate processor-readable tangible non-transient medium used for storage of computer readable instructions or data structures. The processor-readable media can be implemented as any available tangible non-transient media that can be accessed by a general purpose or special purpose computer or processor, or any programmable logic device. Suitable processor-readable media can include tangible media, such as storage or memory media, and transmission media such as electrical, electromagnetic, or digital signals, conveyed via a communication medium such as a network and/or a wireless link. Storage or memory media can include magnetic or optical media, such as conventional hard disks, Compact Disk - Read Only Memory (CD-ROM), volatile or non-volatile media such as Random Access Memory (RAM) (including, but not limited to, Synchronous Dynamic Random Access Memory (SDRAM), Double Data Rate (DDR) RAM, RAMBUS Dynamic RAM (RDRAM), Static RAM (SRAM), etc.), Read Only Memory (ROM), Electrically Erasable Programmable ROM (EEPROM), and flash memory, etc.

As stated above, processing device 106 receives inputs and uses the inputs to select a mode of communication and configuration of avionics system 100a. There are a number of inputs that can be used to select a communication system and configuration. In some examples, an input can include the airspace and flight phase of the aircraft. This information can be obtained using simple navigation and status data, which can be provided using sensors 114, such as a global navigation satellite system (GNSS). In addition, airspace and flight phase data can also be gained using onboard avionic devices 112, such as a flight management system (FMS), or via datalink from a ground station. Moreover, the airspace and flight phase data can also be manually input from the crew, using a human machine interface (HMI) 118, such as a multifunction control display unit (MCDU) used in many aircrafts. Once this data is received by processing device 106 via sensors, avionic devices or manual input, it can configure the system accordingly.

In one embodiment, RMM 105 is notified by an external actor (e.g., pilot, ground based AOC) or by an aircraft onboard system (Communication Management Unit (CMU), FMS or other avionics) that the establishment of a communication link for a particular type of communication is necessary. Processing device 106 polls the situational data inputs, and applies them to selection profiles defined by the selection and configuration instructions 110 for the specified communication type. This evaluation may result in defining a single acceptable configuration for performing the communication, or a prioritized list of acceptable configurations from which processing device 106 may select one for performing the communication. Processing device 106 may then review the current configuration of RU 104 to see if it is already properly configured in an acceptable configuration. If it is, then no further reconfiguration of RU 104 is needed and the communication can proceed. If the current configuration of RU 104 is not already properly configured in an acceptable configuration, then the RRM 105 will need to reconfigure it accordingly.

In one embodiment, processing device 106, based on one of the acceptable configurations just identified, retrieves from memory 108 a set of configuration parameters that specify how RU 104 needs to be configured in order carry out the communication. These configuration parameters may include waveform parameters, for example, filter coefficients, carrier frequency specifications, and modulation algorithms. Processing device 106 sends these configuration parameters to RU 104. At this point, RU 104 has now been reconfigured into an acceptable configuration for proceeding with the communication requested by the external actor or system. In one embodiment, RU 104 may be pre-loaded with a plurality of different sets of configuration parameters so that processing device 106 simply needs to communicate to RU 104 which set of configuration parameters should be made active in order to complete a reconfiguration.

In another embodiment, as opposed to being prompted by an external actor or system, RRM 105 continuously monitors the situational data inputs and periodically applies them to selection profiles defined by the selection and configuration instructions 110 to determine if RU 104 remains in an acceptable configuration for either ongoing or expected communications given current operating conditions. If not, then processing device 106 can preemptively reconfigure RU 104 in a manner as described above. For example, if the RRM 105 receives input that the aircraft is in an oceanic region, RRM 105 can configure to implement Satcom, e.g., Iridium. That is, RRM 105 sends the configuration parameters necessary to implement Satcom to RU 104, which RU 104 then loads and implements the parameters. If the aircraft then lands in an airport where AeroMACS is used, then RRM 105 can reconfigure the system to run AeroMACS, if that is preferred. In some examples, in place of, or in addition to, airspace and flight phase data, other inputs can be received by the processing device.

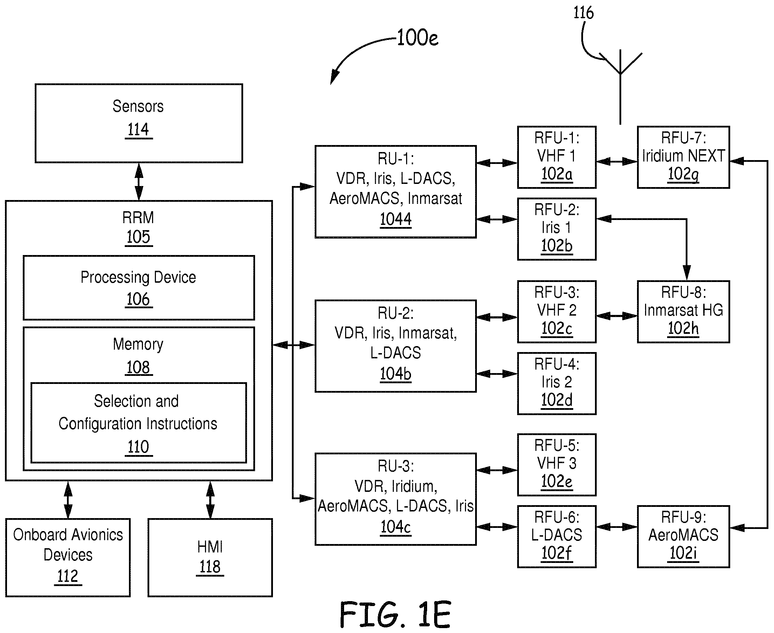

In some embodiments, there can be more than one RFU 102 and more than one RU 104, as shown in Figure 1E. In an example, RUs 104a-104c can be selectively coupled by processing devices 106 to one or more RFUs 102a-102i as shown. That is, the processing device 106 can control which RFUs 102a-102i are coupled to RUs 104a-104c and the path that a signal takes from an antenna 116 through RFUs 102a-102i to RUs 104a-104c. The connections which couple the RFUs 102a-102i to the RUs 104a-104c can include a plurality of communication mediums (e.g., digital optical cables) and a plurality of switches for coupling RUs 104a-104c to RFUs 102a-102i.

Similar to above, in some embodiments, each RU 104a-104c can process two or more waveforms simultaneously. For example, in one embodiment, RFUs 102a-102i and RUs 104a-104c are configured to run the following waveforms: VHF, Iris, L-DACS, Iridium Next, Inmarsat and AeroMacs and each RU 104a-104c in Figure 1E indicates the waveforms that the respective RUs 104a-104c are capable of running. As an example, if the communication system "Iridium" is selected, the RRM 105 can configure RU-3 104c to receive/output signals from/to RFU-7 102g, which corresponds to the Iridium system, by controlling the switches coupling the RFUs 102a-102i to the RUs 104a-104c. More specifically, RRM 105 can configure the path of the signal to flow through RFU-6 102f and RFU-9 102i to RFU-7 102g. If at a later time, communication over AeroMACS is requested, and if it is preferred that RU-3 104c be used, then RU-3 104c can be re-configured to process signals corresponding to the AeroMACS system and the signal can be routed from RU-3 104c to RFU-9 102i through RFU-6 102f. The paths and routing possibilities shown in Figure 1E are only examples and different configurations can be designed, according to how many RUs 104a-104c and RFUs 102a-102i are incorporated into the system 100e.

Further, as an example, multiple RFUs 102a-102i can be used in order to provide operational redundancy and/or can be used to connect to different antennas (not shown). In an example, RFUs 102a-102i and/or the RUs 104a-104c can be a line replaceable unit (LRU) or an integrated modular avionic (IMA) module. In this example, there is some redundancy in the communication systems (e.g., VHF and Iris). Moreover, as an example, an RFU 102a-102i can also act as a bridge, connecting an RFU to an RU. For example, RFU 6 102f acts as a bridge to connect RFU 9 102i to RU 3 104c. As previously stated, however, this is only an example and the waveforms and redundancies can vary by system. For example, another system can be configured to cover all existing and planned communication systems.

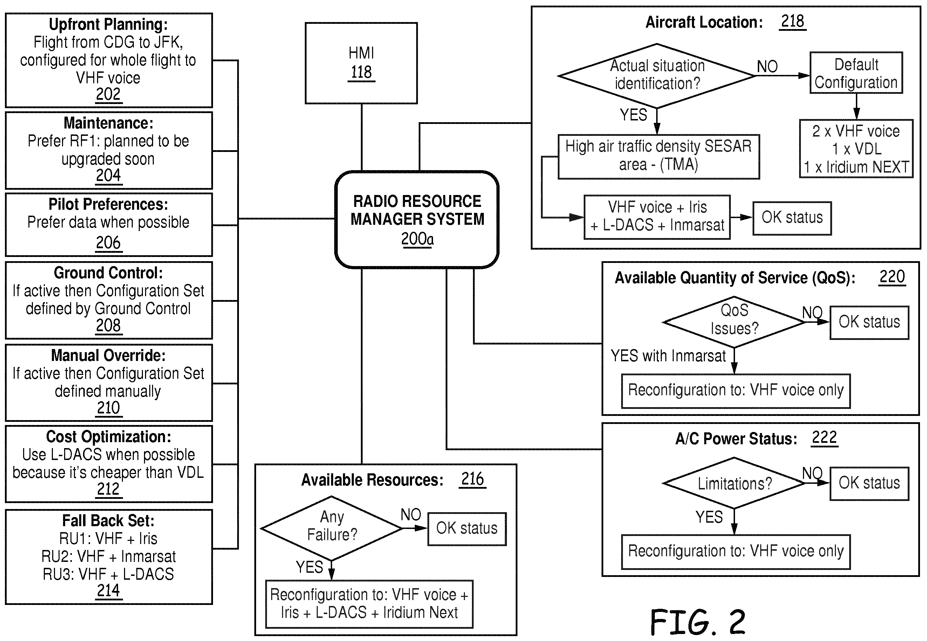

Figure 2 is a block diagram of an RRM 200a further illustrating examples of possible inputs that can be utilized by RRM's 200a to evaluate what is an acceptable configuration for conducting a communication. In one embodiment, RRM 200a comprises processing device 106, memory 108 and selection and configuration instructions 110 such as described with respect to figures 1A-1E and functions as described with respect to those figures.

In one embodiment, planned flight paths can be an input to processing device 106 and RRM 200a can configure RU 104 to use the waveforms known to be required during the whole planned flight, so that continuity of operations can be maximized. This is shown in Figure 2 as "upfront planning" 202. In this example, an aircraft is travelling from Paris (CDG) in France to New York (JFK) in the US. As a result, RRM 200a configures VHF voice to be used for the whole flight. In other examples, the configured communication system could, and will likely, change depending on the aircraft's departure and destination.

In another embodiment, maintenance and component wear can be an input to processing device 106, which RRM 200a can then use to configure the optimal equipment usage. For example, if there is a component that is due for an upgrade, then RRM 200a might configure the system to use that component in order to save the components that are not due for an upgrade. In other examples, if a piece of equipment has been used less often than another, then the RRM 200a can configure the piece of equipment that has been used less to be used. In this example, as shown in "maintenance" 204 in Figure 2, the preferred hardware is RF1 since there is a planned upgrade to that piece of hardware.

In other embodiments, inputs indicating a pilot's preferences 206, a ground control's configuration 208, and/or a manual override 210 can be inputs into RRM 200a. That is, a pilot can input his or her preferences into the RRM 200a using HMI 118 and when those preferences are available, the RRM system 200a will be configured to use them. Or, if the ground control has a configuration (shown as "Ground Control" 208) that it would like the aircraft to use, then RRM 200a will configure the system accordingly. In addition, if a pilot/operator would like to manually override RRM's 200a configuration, the choice to do so could be an input into RRM 200a as shown in Figure 2 as "Manual Override" 210.

In some embodiments, the cost of radio operations ("Cost Optimization" 212) and/or a "Fall Back Set" 214 configuration can be inputs. For "Cost Optimization" 212, the cost of radio operations for systems that require paid third party's services (e.g., fees to communication service providers) can be input into the system and RRM 200a can optimize the configuration based on those costs. In this example, RRM 200a is configured to use L-DACS when it is available because it is cheaper than VDL. Similarly, the cost of radio operations can change depending on the flight path of the aircraft and during the course of the flight. For the "Fall Back Set" 214 input, a fall back definition such as a minimalistic configuration after multiple radio equipment failures can be used by RRM 200a to configure the system. In this example, the "Fall Back Set" 214 inputs for RRM 200a involves using VHF and Iris for RU1, VHF and Inmarsat for RU2 and L-DACS and VHF for RU3. In other examples, this "Fall Back Set" 214 could also be implemented if there are no inputs received by the RRM 200a.

In some embodiments, an "Available Resources" 216 input can be included. In an example, the "Available Resources" 216 input can be a check to determine whether there are any equipment failures. If there aren't any, then RRM 200a maintains its current configuration. However, if there is an equipment failure, then RRM 200a will reconfigure the system to work around the equipment failure. In this example, RRM 200a will reconfigure to VHF voice, Iris, L-DACs and Iridium Next if there is an equipment failure. In some examples, the reconfiguration by the RRM 200a can change depending on which equipment has failed. For example, if the equipment using the waveform VHF has failed, then the reconfiguration of the equipment by the RRM can include allocating a different piece of equipment to VHF.

In other embodiments, an "Aircraft Location" 218 can be input into RRM 200a. In some embodiments, inputting the "Aircraft Location" 218 can include inputting a geographical location. In other embodiments, inputting the "Aircraft Location" 218 can include inputting the "airspace type" provided by the FMS. In even other embodiments, inputting the "Aircraft Location" 218 can include inputting a geographical location and the "airspace type" provided by the FMS. Inputting an "Aircraft Location" 218 can also include choosing a waveform depending on the geographical location and/or airspace type that was inputted into the RRM 200a. The situations determining the waveform configuration can vary. In some examples, a European (SESAR) high air traffic situation could be identified. In this example, if a European high air traffic situation is identified, RRM 200a could reconfigure the system to use a different set of communication systems (e.g., VHF voice, Iris, L-DACs, and Inmarsat, as shown in Figure 2). If there is not any specific situation identified, then the RRM 200a can maintain its default configuration (i.e., two VHF voice, VDL, and Iridium NEXT).

In other embodiments an "Available Quality of Service" (QoS) 220 can be input into RRM 200a. That is, if a communication system (e.g., Iridium NEXT) has a better quality of service than a different communication system (e.g., Inmarsat), RRM 200a can use that information as an input to automatically configure to the better service. The actual quality of service for different communication systems can be provided by the radios (i.e. from RRM 200a) or other external systems (e.g. CMU) or actors (e.g. pilots or air/ground datalink applications)

In other embodiments an "A/C Power Status" 222 input can be used by the RRM 200a. More specifically, in case the main onboard power supply fails, the information about available A/C power for emergency situations can be input into RRM 200a. For example, if the A/C power available for emergency situations is low, then RRM 200a can reconfigure the system to use the communication system that uses the least amount of power (e.g., VHF voice only). If there is enough available A/C power even for emergency situations, then RRM 200a can maintain its current configuration.

As noted throughout this disclosure, the above inputs are just examples and not meant to include all inputs that can be used by RRM 200a. Moreover, a combination of some or all of these inputs (and inputs not listed here) can be used by RRM 200a for configuration. The inputs for RRM 200a can also be weighted by processor 106 based on selection profile defined in selection and configurations instructions 110 so that one input is considered more important by RRM 200a than another input.

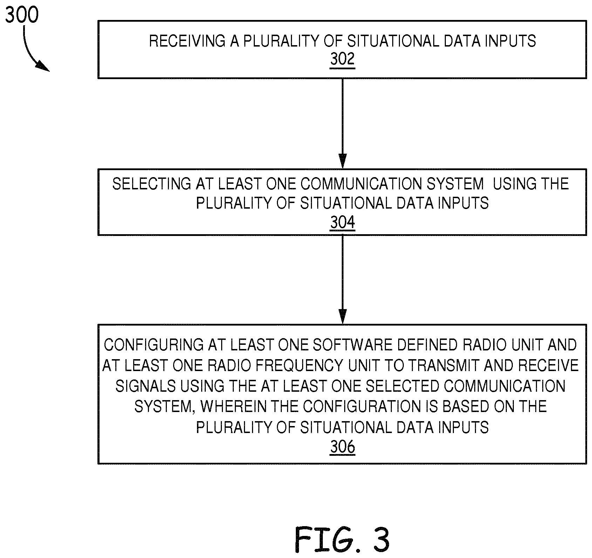

Figure 3 is a flow diagram illustrating an example embodiment of a method 300 for radio resource management. In some embodiments, the method 300 can be performed by an aircraft's radio resource manager (RRM). The situations in which a RRM can perform the method 300 can vary. In some examples, a RRM can perform the method 300 when departing an airport. In some examples, a RRM can perform the method 300 in flight on an interval basis. For example, the RRM could perform the method 300 every couple of minutes. In some other examples, the RRM could perform the method when crossing a geographic boundary. For example, if an aircraft was departing from Europe and flying to the US, the RRM could perform the method 300 when the aircraft enters airspace of the Atlantic Ocean. In some examples, the RRM can perform the method 300 when some failure in communication equipment was identified or another triggering event occurred. These are just examples, however, and not meant to be limiting.

Method 300 begins at 302 with receiving a plurality of situational data inputs. The situational data inputs (also referred to as "inputs") can be received in a number of different ways including, but not limited to, input into an HMI and sensor information obtained from sources such as GNSS or from onboard avionics devices, such as a FMS or a datalink with a ground station. The inputs received can include any of the inputs discussed above in Figures 1-2. Some of the example inputs include, but are not limited to, the following: flight phase and airspace of the aircraft, upfront planning inputs for communications modes that will be used throughout the flight, maintenance calendars of hardware components, pilot preferences of communication systems, ground control communication preferences, cost optimization of communication systems, a fall back set of communication systems, required and available quality of service using a communication system, A/C power status of the aircraft, available communication resources of the aircraft, density of users using a communication system, and manual override input into an HMI.

The method proceeds to 304 with selecting a communication system (also referred to as communication link) using the plurality of situational data inputs. In one embodiment, method 300 receives an input (block 302) that establishment of a communication link for a particular type of communication is necessary. In this example, the necessary communication system is then selected and the method proceeds to 306. In another example, a communication link for a particular type of communication is not necessary, but according to the inputs received (block 302), a communication link is preferred. The reasons for preferring a link can vary and a few examples include: especially heavy traffic on one communication link or the pilot and/or ground station prefers to use a different communication link. In this example, the preferred communication link can be selected, as well.

The communication systems that can be selected can vary, depending on the capability of the radio unit and the radio frequency unit discussed in block 306. The communication systems can include, but are not limited to, the following: HF, HFDL, VHF, VDL, AeroMACS, L-DACS and Satcom protocols including protocols conforming to the following systems: Inmarsat, Iridium, Thuraya, MTSAT, Iris and Iridium NEXT.

The method proceeds to 306 with configuring at least one software defined radio unit (RU) and at least one radio frequency unit (RFU) to transmit and receive signals using the at least one selected communication system, wherein the configuration is based on the plurality of situational data inputs. RU and RFU can have some or all of the same functionality discussed above in Figures 1-2. More specifically, RU in combination with RFU can be configurable to process radio signals in accordance with the different communication systems that were selected (block 304) using software defined radio (SDR) configuration parameters stored in RU's memory. The configuration parameters can include waveform parameters, for example, filter coefficients, carrier frequency specifications, and modulation algorithms. RU and RFU can comprise elements commonly associated with RF signal transmission and reception such as amplifiers, filters, circulators, modulators, etc. for broadcasting RF signals from an antenna and receiving signals via an antenna. The distribution of the elements between the RU and RFU will depend on where the digital to analog conversion occurs. Moreover, the RU and RFU can be separate units or they can be incorporated into one physical unit.

The configuration of the RU and RFU can be done by a radio resource manager, similar to the one discussed above in Figures 1-2. The situational data inputs received (block 302) are used to determine the acceptable configurations of RU and RFU. In the embodiments that there is more than one acceptable configuration, the acceptable configurations can be prioritized, so there is one prioritized configuration. Moreover, in addition to the acceptable configuration being determined, the current configuration of RU and RFU is determined. If the current configuration is the same as the acceptable configuration /prioritized configuration then the communication can proceed. If there current configuration is different than the RU and RFU can be reconfigured to the acceptable configuration/prioritized configuration. In addition, block 306 can further comprise selecting a default configuration for the at least one RU and RFU, if there are no situational data inputs.

As a result of the systems and methods described in this disclosure, the amount of hardware required for an aircraft and the manual switching between communication systems is reduced. Therefore, the expense of, and the training for, the new systems being incorporated in Europe and the US will be reduced.

### EXAMPLE EMBODIMENTS

Example 1 includes an avionics radio resource management system comprising: at least one radio frequency unit configured to transmit and receive signals over an antenna; at least one software defined radio unit configured to communicate with the at least one radio frequency unit, wherein the at least one software defined radio unit can generate and receive signals corresponding to different communication systems; at least one processing device coupled to the at least one software defined radio unit; and at least one memory device coupled to the at least one processing device and configured to store instructions which, when executed by the at least one processing device, cause the at least one processing device to: receive a plurality of situational data inputs; select at least one communication system using the plurality of situational data inputs; and configure the at least one radio frequency unit and the at least one software defined radio unit to transmit and receive signals using the at least one selected communication system, wherein the configuration is based on the plurality of situational data inputs.
Example 2 includes the avionics radio resource management system of Example 1, wherein the plurality of situational data inputs includes data pertaining to the airspace and flight phase of an aircraft using the radio resource management system.
Example 3 includes the avionics radio resource management system of any of Examples 1-2, wherein the plurality of situational data inputs includes at least one of the following: data pertaining to a pilot's preferences, a ground control's configuration and a manual override configuration.
Example 4 includes the avionics radio resource management system of any of Examples 1-3, wherein the plurality of situational data inputs includes a maintenance schedule and component wear for the at least one radio frequency unit and the at least one software defined radio unit.
Example 5 includes the avionics radio resource management system of any of Examples 1-4, wherein the plurality of situational data inputs includes at least one of the following: a cost of radio operations input, an available resources input and a quality of service input.
Example 6 includes the avionics radio resource management system of any of Examples 1-5, wherein configuring the least one radio frequency unit and the at least one software defined radio unit includes prioritizing more than one possible configuration and selecting a highest prioritized configuration.
Example 7 includes the avionics radio resource management system of any of Examples 1-6, wherein the at least one software defined radio unit can process two or more waveforms simultaneously.
Example 8 includes the avionics radio resource management system of any of Examples 1-7, wherein selecting at least one communication system using the plurality of situational data inputs comprises selecting at least one of the following communication systems: high frequency data link, very high frequency data link, high frequency voice, very high frequency voice, L-DACS, AeroMACS, Inmarsat, Iris, Iridium, Thuraya and MTSAT.
Example 9 includes a radio resource management method comprising: receiving a plurality of situational data inputs; selecting at least one communication system using the plurality of situational data inputs; and configuring at least one software defined radio unit and at least one radio frequency unit to transmit and receive signals using the at least one selected communication system, wherein the configuration is based on the plurality of situational data inputs.
Example 10 includes the method of Example 9, further comprising configuring the at least one radio frequency unit and the at least one software defined radio unit to a default configuration when the situational data inputs received do not include information that allows the radio resource manager to configure the at least one software defined radio unit and the at least one radio frequency unit.
Example 11 includes the method of any of Examples 9-10, wherein receiving a plurality of situational data inputs includes receiving data pertaining to the airspace and flight phase of an aircraft applying the radio resource management method.
Example 12 includes the method of any of Examples 9-11, wherein receiving a plurality of situational data inputs includes receiving at least one of the following: data pertaining to a pilot's preferences, a ground control's configuration and a manual override configuration.
Example 13 includes the method of any of Examples 9-12, wherein receiving a plurality of situational data inputs includes receiving a maintenance schedule and component wear for the at least one radio frequency unit and the at least one software defined radio unit.
Example 14 includes the method of any of Examples 9-13, wherein receiving a plurality of situation data inputs includes receiving the current configuration of the at least one software defined radio unit and the at least one radio frequency unit.
Example 15 includes the method of any of Examples 9-14, wherein configuring the at least one software defined radio unit and the at least one radio frequency unit includes prioritizing more than one possible configuration and selecting the highest prioritized configuration.
Example 16 includes an avionics communication system, the system comprising: at least one radio unit implementing a software defined radio; a plurality of sensor devices; one or more onboard avionic devices; and a radio resource management unit coupled to the plurality of sensor devices, the one or more onboard avionics devices, and the at least one radio unit; wherein the radio resource management unit processes situation data inputs received from one or more of the plurality of sensor devices and the one or more onboard avionic devices to select a communication system for conducting radio frequency (RF) communications via the at least one radio unit, wherein the radio resource management unit communicates to the at least one radio unit a first set of configuration parameters associated with the communication system, and wherein the radio resource management unit configures the at least one radio unit to process RF signals based on the first set of configuration parameters.
Example 17 includes the system of Example 16, wherein the situation data inputs received from the one or more of the plurality of sensor devices includes data pertaining to the airspace and flight phase of an aircraft using the radio resource management system.
Example 18 includes the system of any of Examples 16-17, wherein the situation data inputs received from the one or more of the plurality of sensor devices includes at least one of the following: data pertaining to a pilot's preferences, a ground control's configuration and a manual override configuration.
Example 19 includes the system of any of Examples 16-18, wherein the situation data inputs received from the one or more of the plurality of sensor devices includes a maintenance schedule and component wear for the at least one radio unit implementing the software defined radio.
Example 20 includes the system of any of Examples 16-19, wherein the situation data inputs received from the one or more of the plurality of sensor devices includes at least one of the following includes at least one of the following: a cost of radio operations input, an available resources input and a quality of service input.

Although specific embodiments have been illustrated and described herein, it will be appreciated by those of ordinary skill in the art that any arrangement, which is calculated to achieve the same purpose, may be substituted for the specific embodiments shown. Therefore, it is manifestly intended that this invention be limited only by the claims and the equivalents thereof.

## Claims

1. An avionics radio resource management system (100a) comprising:
at least one radio frequency unit (102) configured to transmit and receive signals over an antenna (116);
at least one software defined radio unit (104) configured to communicate with the at least one radio frequency unit (102), wherein the at least one software defined radio unit (104) can generate and receive signals corresponding to different communication systems;
at least one processing device (106) coupled to the at least one software defined radio unit (104); and
at least one memory device (108) coupled to the at least one processing device (106) and configured to store instructions (110) which, when executed by the at least one processing device (106), cause the at least one processing device (106) to:
receive a plurality of situational data inputs;
select at least one communication system using the plurality of situational data inputs; and
configure the at least one radio frequency unit (102) and the at least one software defined radio unit (104) to transmit and receive signals using the at least one selected communication system, wherein the configuration is based on the plurality of situational data inputs, wherein the at least one processing device (106) configures the at least one software defined radio unit (104) to use waveforms based on planned flight paths that are input to the at least one processing device (106).

2. The avionics radio resource management system (100a) of claim 1, wherein the plurality of situational data inputs includes data pertaining to the airspace and flight phase of an aircraft using the radio resource management system.

3. The avionics radio resource management system (100a) of claim 1, wherein the plurality of situational data inputs includes at least one of the following: data pertaining to a pilot's preferences, a ground control's configuration and a manual override configuration.

4. The avionics radio resource management system (100a) of claim 1, wherein the plurality of situational data inputs includes a maintenance schedule and component wear for the at least one radio frequency unit (102) and the at least one software defined radio unit (104).

5. The avionics radio resource management system (100a) of claim 1, wherein the plurality of situational data inputs includes at least one of the following: a cost of radio operations input, an available resources input and a quality of service input.

6. A radio resource management method (300) comprising:
receiving a plurality of situational data inputs (302);
selecting at least one communication system using the plurality of situational data inputs (304); and
configuring at least one software defined radio unit (104) and at least one radio frequency unit (102) to transmit and receive signals using the at least one selected communication system, wherein the configuration is based on the plurality of situational data inputs (306), wherein configuring the at least one software defined radio unit (104) configures the at least one software defined radio unit (104) to use waveforms based on planned flight paths.

7. The method of claim 6, further comprising configuring the at least one radio frequency unit (102) and the at least one software defined radio unit (104) to a default configuration when the situational data inputs received do not include information that allows a radio resource manager to configure the at least one software defined radio unit (104) and the at least one radio frequency unit (102).

8. The method of claim 6, wherein receiving a plurality of situational data inputs includes receiving data pertaining to the airspace and flight phase of an aircraft applying the radio resource management method.

9. The method of claim 6, wherein receiving a plurality of situational data inputs includes receiving at least one of the following: data pertaining to a pilot's preferences, a ground control's configuration and a manual override configuration.

10. The method of claim 6, wherein receiving a plurality of situational data inputs includes receiving a maintenance schedule and component wear for the at least one radio frequency unit and the at least one software defined radio unit.

## Patentansprüche

1. Verwaltungsanordnung für Funkmittel für Flugzeuge (100a), umfassend:
wenigstens eine Hochfrequenzeinheit (102), die dafür ausgelegt ist, Signale über eine Antenne (116) zu senden und zu empfangen;
wenigstens eine Software-bestimmte Funkeinheit (104), die dafür ausgelegt ist, mit der wenigstens einen Hochfrequenzeinheit (102) zu kommunizieren, wobei die wenigstens eine Software-bestimmte Funkeinheit (104) Signale generieren und empfangen kann, die verschiedenen Kommunikationsanordnungen entsprechen;
wenigstens eine Verarbeitungsvorrichtung (106), die mit der wenigstens einen Software-bestimmten Funkeinheit (104) gekoppelt ist; und
wenigstens eine Speichervorrichtung (108), die mit der wenigstens einen Verarbeitungsvorrichtung (106) gekoppelt ist und dafür ausgelegt ist, Anweisungen (110) zu speichern, die, wenn sie von der wenigstens einen Verarbeitungsvorrichtung (106) ausgeführt werden, die wenigstens eine Verarbeitungsvorrichtung (106) dazu veranlassen:
mehrere situationsbedingte Dateneingaben zu empfangen; wenigstens eine Kommunikationsanordnung unter Verwendung der mehreren situationsbedingten Dateneingaben auszuwählen; und
die wenigstens eine Hochfrequenzeinheit (102) und die wenigstens eine Software-bestimmte Funkeinheit (104) zu konfigurieren, um Signale unter Verwendung der wenigstens einen ausgewählten Kommunikationsanordnung zu senden und zu empfangen, wobei die Konfiguration auf den mehreren situationsbedingten Dateneingaben basiert, wobei die wenigstens eine Verarbeitungsvorrichtung (106) die wenigstens eine Software-bestimmte Funkeinheit (104) konfiguriert, um Wellenformen zu verwenden, die auf geplanten Flugwegen basieren, die in die wenigstens eine Verarbeitungsvorrichtung (106) eingegeben werden.

2. Verwaltungsanordnung für Funkmittel für Flugzeuge (100a) nach Anspruch 1, wobei die mehreren situationsbedingten Dateneingaben Daten beinhalten, die sich auf den Luftraum und die Flugphase eines Flugzeugs beziehen, das die Verwaltungsanordnung für Funkmittel verwendet.

3. Verwaltungsanordnung für Funkmittel für Flugzeuge (100a) nach Anspruch 1, wobei die mehreren situationsbedingten Dateneingaben wenigstens eines der Folgenden beinhalten: Daten, die sich auf Voreinstellungen eines Piloten, eine Konfiguration einer Bodenkontrolle und eine Konfiguration der manuellen Übersteuerung beziehen.

4. Verwaltungsanordnung für Funkmittel für Flugzeuge (100a) nach Anspruch 1, wobei die mehreren situationsbedingten Dateneingaben einen Wartungszeitplan und Komponentenverschleiß für die wenigstens eine Hochfrequenzeinheit (102) und die wenigstens eine Software-bestimmte Funkeinheit (104) beinhalten.

5. Verwaltungsanordnung für Funkmittel für Flugzeuge (100a) nach Anspruch 1, wobei die mehreren situationsbedingten Dateneingaben wenigstens eines der Folgenden beinhalten: eine Eingabe der Kosten von Funkoperationen, eine Eingabe der verfügbaren Mittel und eine Eingabe der Dienstgüte.

6. Verwaltungsverfahren für Funkmittel (300), umfassend:
Empfangen mehrerer situationsbedingter Dateneingaben (302);
Auswählen wenigstens einer Kommunikationsanordnung unter Verwendung der mehreren situationsbedingten Dateneingaben (304); und
Konfigurieren wenigstens einer Software-bestimmten Funkeinheit (104) und wenigstens einer Hochfrequenzeinheit (102), um Signale unter Verwendung der wenigstens einen ausgewählten Kommunikationsanordnung zu senden und zu empfangen, wobei die Konfiguration auf den mehreren situationsbedingten Dateneingaben (306) basiert, wobei durch das Konfigurieren der wenigstens einen Software-bestimmten Funkeinheit (104) die wenigstens eine Software-bestimmte Funkeinheit (104) konfiguriert wird, um Wellenformen zu verwenden, die auf geplanten Flugwegen basieren.

7. Verfahren nach Anspruch 6, das ferner das Konfigurieren der wenigstens einen Hochfrequenzeinheit (102) und der wenigstens einen Software-bestimmten Funkeinheit (104) auf eine Standardkonfiguration umfasst, wenn die empfangenen situationsbedingten Dateneingaben keine Informationen beinhalten, die einem Funkmittelverwalter ermöglichen, die wenigstens eine Software-bestimmte Funkeinheit (104) und die wenigstens eine Hochfrequenzeinheit (102) zu konfigurieren.

8. Verfahren nach Anspruch 6, wobei das Empfangen mehrerer situationsbedingter Dateneingaben das Empfangen von Daten beinhaltet, die sich auf den Luftraum und die Flugphase eines Flugzeugs beziehen, das das Verwaltungsverfahren für Funkmittel anwendet.

9. Verfahren nach Anspruch 6, wobei das Empfangen mehrerer situationsbedingter Dateneingaben das Empfangen wenigstens eines der Folgenden beinhaltet:
Daten, die sich auf Voreinstellungen eines Piloten, eine Konfiguration einer Bodenkontrolle und eine Konfiguration der manuellen Übersteuerung beziehen.

10. Verfahren nach Anspruch 6, wobei das Empfangen mehrerer situationsbedingter Dateneingaben das Empfangen eines Wartungszeitplans und von Komponentenverschleiß für die wenigstens eine Hochfrequenzeinheit und die wenigstens eine Software-bestimmte Funkeinheit beinhaltet.

## Revendications

1. Système (100a) de gestion de ressources radio d'avionique, comprenant :
au moins une unité radiofréquence (102) configurée pour émettre et recevoir des signaux par l'intermédiaire d'une antenne (116) ;
au moins une unité radio logicielle (104) configurée pour communiquer avec l'au moins une unité radiofréquence (102), l'au moins une unité radio logicielle (104) étant apte à générer et recevoir des signaux correspondant à des systèmes de communication différents ;
au moins un dispositif de traitement (106) couplé à l'au moins une unité radio logicielle (104) ; et
au moins un dispositif de mémoire (108) couplé à l'au moins un dispositif de traitement (106) et configuré pour stocker des instructions (110) qui, une fois exécutées par l'au moins un dispositif de traitement (106), amènent l'au moins un dispositif de traitement (106) à :
recevoir une pluralité d'entrées de données situationnelles ;
sélectionner au moins un système de communication au moyen de la pluralité d'entrées de données situationnelles ; et
configurer l'au moins une unité radiofréquence (102) et l'au moins une unité radio logicielle (104) pour leur faire émettre et recevoir des signaux au moyen de l'au moins un système de communication sélectionné, la configuration étant basée sur la pluralité d'entrées de données situationnelles, l'au moins un dispositif de traitement (106) configurant l'au moins une unité radio logicielle (104) pour lui faire utiliser des formes d'onde sur la base de trajectoires de vol planifiées qui sont entrées dans l'au moins un dispositif de traitement (106).

2. Système (100a) de gestion de ressources radio d'avionique selon la revendication 1, dans lequel la pluralité d'entrées de données situationnelles comporte des données portant sur l'espace aérien et la phase de vol d'un aéronef faisant appel au système de gestion de ressources radio.

3. Système (100a) de gestion de ressources radio d'avionique selon la revendication 1, dans lequel la pluralité d'entrées de données situationnelles comporte au moins un élément dans le groupe constitué par : des données portant sur des préférences d'un pilote, une configuration d'un contrôle sol et une configuration de surpassement manuel.

4. Système (100a) de gestion de ressources radio d'avionique selon la revendication 1, dans lequel la pluralité d'entrées de données situationnelles comporte un calendrier de maintenance et une usure des composants pour l'au moins une unité radiofréquence (102) et l'au moins une unité radio logicielle (104).

5. Système (100a) de gestion de ressources radio d'avionique selon la revendication 1, dans lequel la pluralité d'entrées de données situationnelles comporte au moins un élément dans le groupe constitué par : une entrée relative à un coût d'opérations radio, une entrée relative à des ressources disponibles et une entrée relative à une qualité de service.

6. Procédé (300) de gestion de ressources radio, comprenant :
la réception d'une pluralité d'entrées de données situationnelles (302) ;
la sélection d'au moins un système de communication au moyen de la pluralité d'entrées de données situationnelles (304) ; et
la configuration d'au moins une unité radio logicielle (104) et d'au moins une unité radiofréquence (102) pour leur faire émettre et recevoir des signaux au moyen de l'au moins un système de communication sélectionné, la configuration étant basée sur la pluralité d'entrées de données situationnelles (306), la configuration de l'au moins une unité radio logicielle (104) configurant l'au moins une unité radio logicielle (104) pour lui faire utiliser des formes d'onde sur la base de trajectoires de vol planifiées.

7. Procédé selon la revendication 6, comprenant en outre la configuration de l'au moins une unité radiofréquence (102) et de l'au moins une unité radio logicielle (104) sur une configuration par défaut lorsque les entrées de données situationnelles reçues ne comportent pas d'informations permettant à un gestionnaire de ressources radio de configurer l'au moins une unité radio logicielle (104) et l'au moins une unité radiofréquence (102).

8. Procédé selon la revendication 6, dans lequel la réception d'une pluralité d'entrées de données situationnelles comporte la réception de données portant sur l'espace aérien et la phase de vol d'un aéronef mettant en application le procédé de gestion de ressources radio.

9. Procédé selon la revendication 6, dans lequel la réception d'une pluralité d'entrées de données situationnelles comporte la réception d'au moins un élément dans le groupe constitué par : des données portant sur des préférences d'un pilote, une configuration d'un contrôle sol et une configuration de surpassement manuel.

10. Procédé selon la revendication 6, dans lequel la réception d'une pluralité d'entrées de données situationnelles comporte la réception d'un calendrier de maintenance et d'une usure des composants pour l'au moins une unité radiofréquence et l'au moins une unité radio logicielle.
